(19) **Europäisches Patentamt**

**European Patent Office**

**Office européen des brevets**

(11) **EP 0 974 222 B1**

(12) **FASCICULE DE BREVET EUROPEEN**

(45) Date de publication et mention
de la délivrance du brevet:
**16.06.2004 Bulletin 2004/25**

(51) Int Cl.⁷: **H04M 19/00**

(21) Numéro de dépôt: **98921531.4**

(22) Date de dépôt: **10.04.1998**

(86) Numéro de dépôt international:
**PCT/FR1998/000740**

(87) Numéro de publication internationale:
**WO 1998/046003 (15.10.1998 Gazette 1998/41)**

(54) **CIRCUIT D'INTERFACE ANALOGIQUE POUR EQUIPEMENT TELEPHONIQUE**

ANALOGE SCHNITTSTELLENSCHALTUNG FÜR FERNSPRECHGERÄT

TELEPHONE EQUIPMENT ANALOG INTERFACE CIRCUIT

(84) Etats contractants désignés:
**CH DE GB IT LI SE**

(30) Priorité: **10.04.1997 FR 9704429**

(43) Date de publication de la demande:
**26.01.2000 Bulletin 2000/04**

(73) Titulaire: **SCHLUMBERGER Systèmes
92120 Montrouge (FR)**

(72) Inventeurs:
• **BUDAN, Henri
F-78470 Saint Rémy les Chevreuses (FR)**

• **BARBIER, Serge
F-78990 Elancourt (FR)**

(74) Mandataire: **Weihs, Bruno et al
Rosenthal & Osha,
121, avenue des Champs Elysées
75008 Paris (FR)**

(56) Documents cités:
**US-A- 4 319 093          US-A- 4 562 525
US-A- 4 837 818**

## Description

La présente invention concerne un circuit d'interface analogique pour équipement téléphonique.

L'invention trouve une application particulièrement avantageuse dans le domaine des équipements téléphoniques, notamment publiphones et centraux téléphoniques.

Les circuits d'interface analogique pour équipement téléphonique comportent, en règle générale, un circuit d'isolation prévu pour assurer la séparation entre une composante continue, destinée à l'alimentation des circuits, et une composante alternative, représentant le signal audio à transmettre, constituant toutes deux le signal différentiel de ligne.

La séparation desdites composantes continue et alternative est réalisée, habituellement, au moyen d'une impédance d'isolement présentant une valeur élevée en régime alternatif et une valeur théoriquement nulle en régime continu.

De manière usuelle, ladite impédance d'isolement utilise un bloc-ballast constitué par un transistor bipolaire ou Mosfet. Afin d'opposer une forte impédance aux signaux alternatifs de tension souvent élevée présents sur la ligne, ce bloc-ballast doit maintenir en permanence une chute de tension supérieure à la valeur-crête de cette tension. La perte de puissance qui en découle est égale au produit de ladite chute de tension, 3V par exemple, par le courant continu qui traverse le ballast, de l'ordre de 20mA, soit au total une perte de 60mW.

Ces pertes en ligne, ajoutées à la diminution de la tension continue disponible pour l'alimentation de l'équipement téléphonique, limitent la longueur de ligne utilisable pour l'installation de l'équipement.

Un autre moyen pour réaliser la fonction d'isolation continu/alternatif est de mettre en oeuvre une auto-inductance d'isolement de forte valeur de manière à présenter une impédance élevée à la composante alternative. Pour garantir une isolation supérieure à 9kΩ pour des fréquences au-dessus de 300Hz, la valeur de l'auto-inductance d'isolement doit être d'au moins 5H. Toutefois, un tel composant serait coûteux, encombrant et lourd, si l'on voulait limiter sa résistance parasite à une valeur qui n'occasionne pas de pertes importantes sur la composante continue.

Le brevet US 4,562,525, Ferry et al., décrit un circuit d'alimentation pourvu d'un dispositif de séparation entre la composante continue et la composante alternative. Le circuit comprend des moyens de contrôle permettant de produire un courant alternatif qui annule un éventuel courant alternatif entre deux bornes.

Le brevet US 4,837,818, Pieters et al., décrit un circuit de ligne de télécommunication comprenant un pont de Herter ayant une pluralité de fonctions : couplage des connections de réception et d'émission à la ligne d'abonné, alors que la sortie détecteur du pont alimente la connection d'émission, les boucles de synthèse d'impédances continues et alternatives, et les moyens de supervision de boucle, en présence éventuelle d'une sonnerie.

Le brevet US 4,319,093, Bars, décrit une alimentation pour poste d'abonné téléphonique dans lequel un signal est éliminé grâce à un circuit de compensation pendant que le poste d'abonné est en réception.

Aussi, le problème technique à résoudre par l'objet de la présente invention est de proposer un circuit d'interface analogique pour équipement téléphonique, comportant un circuit d'isolation apte à séparer, au moyen d'une impédance d'isolement, une composante continue et une composante alternative d'un courant différentiel de ligne, lequel circuit permettrait d'obtenir une séparation efficace de la composante alternative sans pour autant provoquer de pertes de ligne sensibles pour la composante continue.

La solution au problème technique posé consiste, selon la présente invention, en ce que, une résistance d'échantillonnage de faible valeur étant disposée en série avec ladite impédance d'isolement, ledit circuit d'isolation comporte un circuit de contre-réaction apte à annuler la différence de potentiel alternative aux bornes de ladite résistance d'échantillonnage.

Ainsi, en annulant la tension alternative aux bornes de la résistance d'échantillonnage, on annule également la composante alternative du courant de ligne, lequel traverse ladite résistance d'échantillonnage. Bien entendu, le terme « annuler » doit être pris ici au sens large pour signifier toute réduction des grandeurs concernées à une valeur acceptable pour un fonctionnement satisfaisant de l'équipement téléphonique considéré.

Selon un mode particulier de réalisation du circuit conforme à l'invention, ledit circuit de contre-réaction comprend un amplificateur opérationnel de gain infini dont les bornes d'entrée sont reliées aux bornes de la résistance d'échantillonnage et dont la borne de sortie est reliée à la borne commune à l'impédance d'isolement et à la résistance d'échantillonnage.

On montrera plus loin en détail que la valeur apparente de l'impédance d'isolement pour la composante alternative est multipliée par un facteur proportionnel au gain bouclé dudit amplificateur opérationnel, ce qui permet d'envisager une valeur physique réelle de ladite impédance d'isolement pour la composante continue beaucoup plus faible que celle actuellement rencontrée dans les circuits d'isolation connus, et donc de diminuer sensiblement les pertes ohmiques.

Là encore, on entendra par "gain infini" un gain de valeur élevée, compatible avec le degré d'annulation désiré pour la composante continue du signal de ligne.

En particulier, dans le cas où ladite impédance d'isolement est une auto-inductance, on peut donner à ladite auto-inductance une valeur nettement inférieure à celles utilisées jusqu'à présent dans les circuits classiques, avec l'avantage d'en diminuer la résistance et donc les pertes en courant continu.

Il faut également noter par ailleurs que, de manière usuelle, le bloc-ballast d'isolation est placé sur l'un des accès de la ligne, l'autre accès devenant la référence de masse. Il en résulte une dissymétrie d'impédance en mode commun par rapport à la masse. Ceci est défavorable pour les performances en compatibilité électromagnétique (CEM).

Aussi, dans le but de remédier à cet inconvénient, l'invention prévoit que ladite impédance d'isolement est constituée par des enroulements d'un transformateur de rapport 1/1, mis en série le long du circuit d'isolation.

On obtient ainsi une symétrie parfaite en mode commun par rapport à la masse. Cette symétrisation a également pour grand avantage d'améliorer les performances CEM du circuit d'interface, objet de l'invention.

Les circuits d'interface analogiques pour équipement téléphonique comportent également, outre le circuit d'isolation d'impédance alternative théoriquement infinie, un adaptateur d'impédance prévu pour amener ladite impédance alternative à une valeur contrôlée, définie par l'opérateur du réseau téléphonique, par exemple 600Ω, selon les normes en vigueur.

Habituellement, la fonction d'adaptation d'impédance est réalisée par un pont de Wheatstone comprenant dans ses branches les impédances demandées. Celles-ci, traversées par le signal utile, sont une cause de gaspillage de puissance et nécessitent des composants supplémentaires spécifiques qui doivent être modifiés pour chaque pays ayant des standards différents.

C'est pourquoi le circuit de contre-réaction défini dans l'invention peut être adapté pour synthétiser une impédance finie parfaitement contrôlée plutôt qu'une impédance infinie correspondant à l'annulation du courant alternatif par le dispositif décrit précédemment.

Le principe de la synthèse d'une impédance finie est basée sur l'asservissement de la tension aux bornes de la résistance d'échantillonnage. Une tension de référence créée par un module résistif caractérisant l'impédance à synthétiser est alimentée par la ligne téléphonique. Ce module de forte résistivité présente une charge négligeable pour la ligne.

Le dispositif d'asservissement décrit plus haut pour annuler la tension sur la résistance d'échantillonnage opère maintenant pour assurer l'égalité entre la tension aux bornes de la résistance d'échantillonnage et la tension du module résistif.

Ce module-impédance est aisément interchangeable de manière à satisfaire toutes les normes en vigueur.

De plus, il est possible, à partir de cet adaptateur d'impédance, de réaliser la conversion 2/4 fils nécessaire pour découpler de la ligne les signaux reçus des signaux émis.

A cet effet, le circuit d'interface analogique de l'invention est remarquable en ce qu'il comporte un convertisseur 2/4 fils constitué, d'une part, d'un amplificateur opérationnel d'émission, apte à injecter un signal d'émission sur la ligne à travers ledit adaptateur d'impédance, et, d'autre part, d'un amplificateur opérationnel de réception, apte à recevoir de la ligne un signal de réception sur une première borne d'entrée et ledit signal d'émission sur une deuxième borne d'entrée.

La description qui va suivre en regard des dessins annexés, donnés à titre d'exemples non limitatifs, fera bien comprendre en quoi consiste l'invention et comment elle peut être réalisée.

La figure 1 est un schéma d'un circuit d'isolation d'un circuit d'interface analogique selon l'invention.

La figure 2 et un schéma d'une variante de réalisation du circuit d'isolation de la figure 1.

La figure 3 est un schéma du circuit d'isolation de la figure 2 muni d'un adaptateur d'impédance.

La figure 4 est un schéma du circuit de la figure 3 muni d'un convertisseur 2/4 fils.

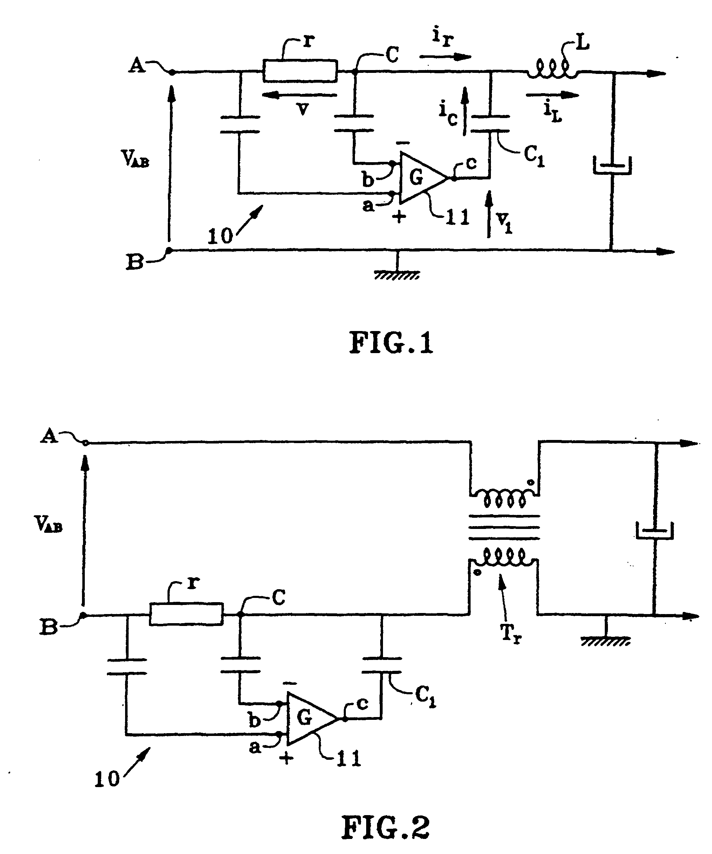

Le circuit représenté sur la figure 1 est un circuit d'isolation d'un circuit d'interface analogique pour un équipement téléphonique. La constitution définitive dudit circuit d'interface analogique de l'invention comporte en outre un adaptateur d'impédance et un convertisseur 2/4 fils dont on montrera dans la suite comment ils se combinent successivement avec le circuit d'isolation de la figure 1.

La fonction dudit circuit d'isolation est de séparer la composante continue de la composante alternative d'un signal différentiel de ligne appliqué aux bornes d'entrée A, B du circuit. Pour cela, le circuit d'isolation doit présenter une impédance à la fois très élevée en alternatif et très faible en continu, ceci pour éviter les pertes ohmiques.

A cet effet, le circuit d'isolation de la figure 1 comporte en série une résistance r d'échantillonnage de faible valeur et une impédance d'isolement qui, dans l'exemple représenté, est une auto-inductance L. D'une manière générale, la résistance r est présente dans ce type de circuit pour échantillonner la composante continue du signal de ligne, destinée à l'alimentation de l'équipement téléphonique.

Pour que l'impédance alternative vue de l'entrée AB du circuit d'isolation soit infinie, il suffit que le courant alternatif $i_r$ dans la résistance r d'échantillonnage soit nul. C'est pourquoi il est prévu un circuit 10 de contre-réaction apte à annuler la différence de potentiel v aux bornes A, C de la résistance r.

Selon le mode de réalisation représenté sur la figure 1, ledit circuit 10 de contre-réaction comprend un amplificateur opérationnel 11 de gain G infini au sens défini plus haut. Les bornes a, b d'entrée dudit amplificateur opérationnel 11 sont reliées aux bornes A, C de la résistance r d'échantillonnage, tandis que la borne c de sortie est reliée à la borne commune C à l'impédance L d'isolement et à la résistance r.

Nous avons :

$$v = r.i_r$$

$$v_1 = Gv = G\, r.i_r$$

D'autre part :

$$i_C = jC_1\omega[(G+1)\, ri_r - V_{AB}\,] \approx jC_1\omega\,(Gri_r - V_{AB})$$

et

$$i_r = (V_{AB} - ri_r)/jL\omega \approx V_{AB}\,/\,jL\omega$$

ce qui, combiné avec

$$i_L = i_c + i_r \approx i_c$$

donne

$$|i_r| = |i_L + jC_1\omega V_{AB}|/K$$

avec

$$K = \omega r C_1 G$$

On voit que pour ce qui concerne l'auto-inductance L tout se passe comme si sa valeur vis-à-vis de la composante alternative était multipliée par K, tout en restant inchangée vis-à-vis de la composante continue. En d'autres termes, le circuit d'isolation de la figure 1 a pour effet de synthétiser électroniquement une auto-inductance apparente de forte valeur en alternatif à partir d'une auto-inductance physique de valeur beaucoup plus faible en continu, donc avec beaucoup moins de pertes ohmiques, conformément au but recherché.

Numériquement, avec

$$G = 1000,\ r = 10\Omega,\ f = 300Hz\ et\ C_1 = 220\mu F$$

on obtient     $K = 4100$

Par contre, la résistance présentée en courant continu est très faible, égale à $r. r_L$, $r_L$ étant la résistance de l'auto-inductance L, soit $20\Omega$ avec $r_L = 10\Omega$.

La puissance consommée par l'ensemble est la somme de :

- la puissance réactive dans l'auto-inductance L :

$$P_L = V^2{}_{ABmax}/L\omega$$

avec par exemple deux signaux de fort niveau sur la ligne, un signal à 1kHz et 0,775V et un signal à 16kHz et 1,2V, une auto-inductance de 100mH, on obtient $P_L = 2.2mW$,

- la puissance continue dans la résistance r d'échantillonnage et la résistance $r_L$ de l'auto-inductance L, laquelle est très faible dans le cas de lignes longues quand le courant est limité,

- la puissance consommée pour l'alimentation de l'amplificateur opérationnel 11, de l'ordre du milliwatt avec des composants récents.

En conclusion, le circuit conforme à l'invention conduit à une réduction importante de la puissance perdue dans l'équipement, ainsi qu'à la disparition de la chute de tension qui était due au transistor-ballast dans la solution conventionnelle, l'ensemble de ces avantages rendant possible un fonctionnement sous des tensions d'alimentation plus faibles et donc des lignes plus longues.

Sur la figure 2 est représentée une variante du circuit d'isolation de la figure 1 dans laquelle l'impédance d'isolement est constituée par des enroulements d'un transformateur Tr de rapport 1 / 1, à la valeur de la résistance r près qui est négligeable. La mise en série des enroulements quadruple la valeur de l'auto-inductance équivalente, ce qui permet de diminuer la valeur de chacun des enroulements.

Comme déjà indiqué plus haut, cette symétrisation du circuit est un avantage énorme pour l'amélioration des performances CEM de l'équipement.

Enfin, on peut observer sur la figure 2 que le traitement de la composante alternative du signal est effectué sur la ligne de faible potentiel, à la masse du continu, d'où la possibilité d'utiliser des composants basse tension, à coût réduit.

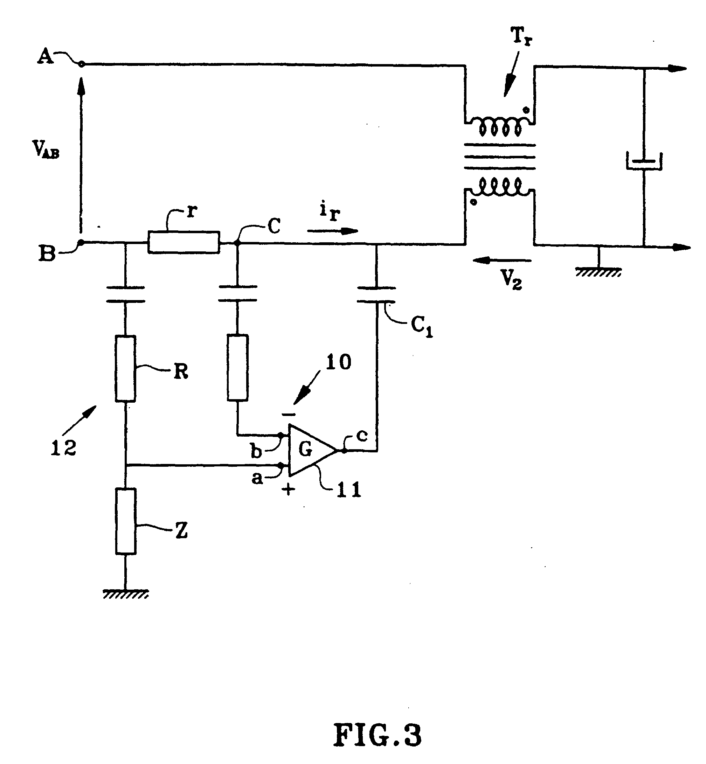

La figure 3 montre une évolution du circuit d'isolation de la figure 2, selon laquelle l'impédance $Z_{AB}$ d'entrée dudit circuit n'est plus infinie mais a une valeur définie par l'opérateur responsable de l'équipement téléphonique considéré et déterminée par les normes en vigueur, par exemple $600\Omega$.

Dans ce but, le circuit 10 de contre-réaction comporte un adaptateur 12 d'impédance constitué par un diviseur de tension disposé sur la borne a d'entrée de l'amplificateur opérationnel 11 reliée à la borne A de la résistance r d'échantillonnage opposée à la borne commune C.

**[0051]** - Avec :

$$v_2 = V_B Z/(R+Z) = V_B - ri_r$$

$$V_B = -V_{AB}/2$$

$$R = k\, r$$

l'impédance d'entrée alternative $Z_{AB}$ du circuit vaut :

$$Z_{AB} = - V_{AB}/i_r = 2 (Z/k+r)$$

soit $Z_{AB} \approx 2Z/k$

Pour obtenir une impédance $Z_{AB}$ de 600Ω par exemple, on peut utiliser une résistance Z de 300kΩ avec un coefficient k de 1000, soit une résistance R de 10kΩ pour r = 10Ω

L'utilisation d'un coefficient k de valeur importante permet, gràce à un courant faible de limiter la puissance dissipée dans la branche de référence, d'où une économie d'énergie supplémentaire.

On peut également noter que l'impédance $Z_{AB}$ est fixée par les résistances R et Z du diviseur 12 de tension, lequel se présente donc comme un module-impédance qui peut être facilement changé selon les standards.

Signalons par ailleurs la possibilité d'utiliser des composants de synthèse d'impédance programmables qui ne supportent que des courants faibles (effet miroir), seuls disponibles.

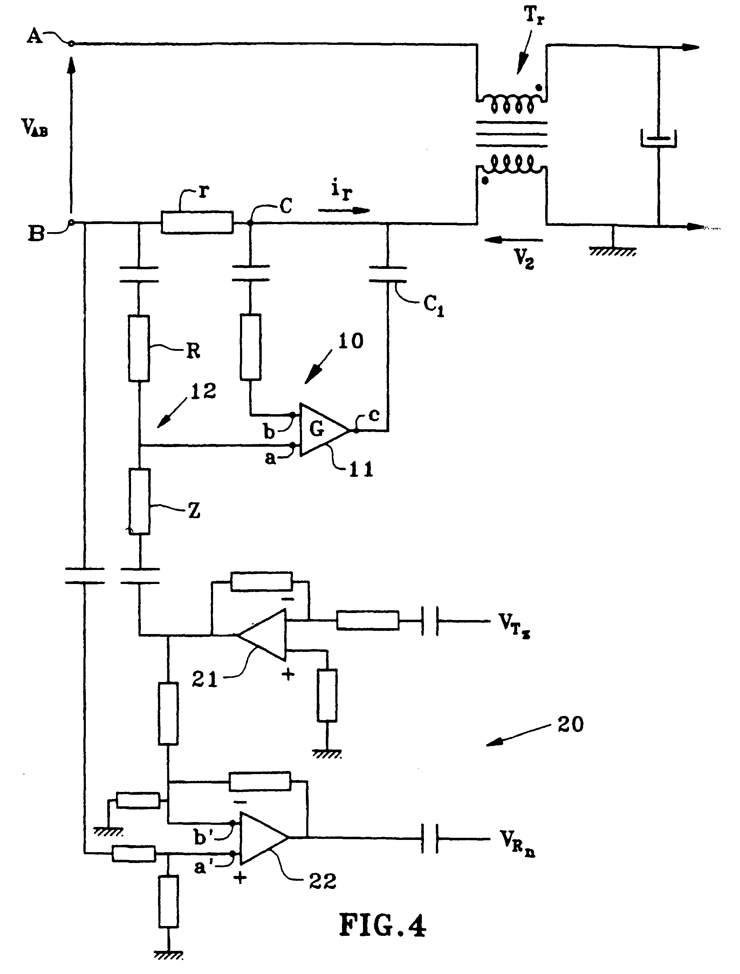

La figure 4 montre un circuit d'interface analogique dans son ensemble, réalisé à partir du circuit de la figure 3 adapté en impédance, auquel on a ajouté un convertisseur 2/4 fils 20 destiné à assurer la séparation de signaux alternatifs de réception Rx et d'émission Tx et l'injection dudit signal alternatif d'émission Tx sur la ligne.

Comme l'indique la figure 4, ledit convertisseur 2/4 fils 20 comporte un amplificateur opérationnel 21 d'émission, apte à injecter le signal d'émission Tx à travers l'adaptateur 12 d'impédance. L'adaptation n'est pas perturbée puisque la sortie de l'amplificateur 21 a une impédance très inférieure à Z (Z = $kZ_{AB}/2$). Avec un amplificateur 21 de gain unité, on retrouve la tension $V_{Tx}$ du signal d'émission sur la ligne.

Le convertisseur 2/4 fils de la figure 4 comporte également un amplificateur opérationnel 22 de réception, apte à recevoir de la ligne un signal Rx de réception sur une première borne a' d'entrée et ledit signal Tx d'émission sur une deuxième borne b' d'entrée.

Sur la borne a' d'entrée de l'amplificateur 22 est appliquée une tension égale à $V_B = V_{Rx}/2 + V_{Tx}$. La tension appliquée à la borne b' d'entrée de ce même amplificateur étant $V_{Tx}$ on obtient en sortie, avec un gain de 6dB, la tension $V_{Rx}$ du signal Rx de réception.

## Revendications

1.　Circuit d'interface analogique pour équipement téléphonique, comportant un circuit d'isolation apte à séparer, au moyen d'une impédance (L; $T_r$) d'isolement, une composante continue et une composante alternative d'un courant différentiel de ligne, **ca-**

**ractérisé en ce que**, une résistance (r) d'échantillonnage de faible valeur étant disposée en série avec ladite impédance d'isolement, ledit circuit d'isolation comporte un circuit (10) de contre-réaction apte à annuler la différence (v) de potentiel alternative aux bornes (A, C) de ladite résistance (r) d'échantillonnage.

2.　Circuit selon la revendication 1, **caractérisé en ce que** ledit circuit (10) de contre-réaction comprend un amplificateur opérationnel (11) de gain (G) infini dont les bornes (a, b) d'entrée sont reliées aux bornes (A, C) de la résistance (r) d'échantillonnage et dont la borne (c) de sortie est reliée à la borne commune (C) de l'impédance (L, $T_r$) d'isolement et à la résistance (r) d'échantillonnage.

3.　Circuit selon l'une des revendications 1 ou 2, **caractérisé en ce que** ladite impédance d'isolement est une auto-inductance (L).

4.　Circuit selon l'une des revendications 1 ou 2 , **caractérisé en ce que** ladite impédance d'isolement est constituée par des enroulements d'un transformateur ($T_r$) de rapport 1/1, mis en série le long du circuit d'isolation.

5.　Circuit selon l'une quelconque des revendications 2 à 4, **caractérisé en ce qu'**il comporte un adaptateur (12) d'impédance constitué par un diviseur de tension disposé sur la borne (a) d'entrée dudit amplificateur opérationnel (11) reliée à la borne (A) de la résistance (r) d'échantillonnage opposée à ladite borne commune (C).

6.　Circuit selon la revendication 5, **caractérisé en ce qu'**il comporte un convertisseur 2/4 fils (20) constitué, d'une part, d'un amplificateur opérationnel (21) d'émission, apte à injecter un signal ($T_x$) d'émission sur la ligne à travers ledit adaptateur (12) d'impédance, et, d'autre part, d'un amplificateur opérationnel (22) de réception, apte à recevoir de la ligne un signal ($R_x$) de réception sur une première borne (a') d'entrée et ledit signal ($T_x$) d'émission sur une deuxième borne (b') d'entrée.

## Patentansprüche

1.　Analoge Schnittstellenschaltung für Telefoneinrichtungen mit einer Abtrennschaltung, die dazu eingerichtet ist, mittels einer Sperrimpedanz (L; $T_r$) eine Gleichstromkomponente und eine Wechselstromkomponente eines differentiellen Leitungsstromes zu trennen, **dadurch gekennzeichnet, dass** ein Messwiderstand (r) mit niedrigem Wert mit der Sperrimpedanz in Reihe geschaltet ist, wobei die Abtrennschaltung eine Gegenkopplungsschaltung (10) umfasst, die dazu eingerichtet ist, um die Differenz (v) des Wechselstrompotentials an den Klemmen (A, C) des Messwiderstandes (r) aufzuheben.

2. Schaltung nach Anspruch 1, **dadurch gekennzeichnet, dass** die Gegenkopplungsschaltung (10) einen Operationsverstärker (11) mit unendlicher Verstärkung (G) umfasst, dessen Eingangsklemmen (a, b) mit den Klemmen (A, C) des Messwiderstandes (r) verbunden sind und dessen Ausgangsklemme (c) mit der gemeinsamen Klemme (C) der Sperrimpedanz (L, $T_r$) und des Messwiderstandes (r) verbunden ist.

3. Schaltung nach einem der Ansprüche 1 oder 2, **dadurch gekennzeichnet, dass** die Sperrimpedanz eine Selbstinduktanz (L) ist.

4. Schaltung nach einem der Ansprüche 1 oder 2, **dadurch gekennzeichnet, dass** die Sperrimpedanz aus den Wicklungen eines Transformators ($T_r$) mit einem Übersetzungsverhältnis 1:1 gebildet ist, der längs der Abtrennschaltung in Reihe geschaltet ist.

5. Schaltung nach einem der Ansprüche 2 bis 4, **dadurch gekennzeichnet, dass** sie einen Impedanzwandler (12) aufweist, der aus einem Spannungsteiler gebildet ist, welcher an der Eingangsklemme (a) des Operationsverstärkers (11) angeordnet ist, die mit der Klemme (A) des Messwiderstandes (r) verbunden ist, welche der gemeinsamen Klemme (C) gegenüber liegt.

6. Schaltung nach Anspruch 5, **dadurch gekennzeichnet, dass** sie einen 2/4-Drahtumsetzer (20) umfasst, der auf der einen Seite durch einen Sendeoperationsverstärker (21) gebildet ist, der dazu eingerichtet ist, um über den Impedanzwandler (12) ein Sendesignal ($T_x$) auf die Leitung zu geben, und auf der anderen Seite durch einen Empfangsoperationsverstärker (22) gebildet ist, der dazu eingerichtet ist, um von der Leitung ein Empfangssignal ($R_x$) an einer ersten Eingangsklemme (a') und das Sendesignal ($T_x$) an einer zweiten Eingangsklemme (b') zu empfangen.

**Claims**

1. Telephone equipment analog interface circuit, comprising an isolating circuit capable of separating, by means of an isolating impedance (L; $T_r$), a direct component and an alternating component from a differential line current, **characterized in that**, a sampling resistor (r) of small value being serially arranged with said isolating impedance, said isolating circuit comprises an inverter feedback circuit (10) capable of canceling out the difference (v) of alternating potential at the terminals (A, C) of said sampling resistance (r).

2. Circuit according to the claim 1, **characterized in that** said inverter feedback circuit (10) comprises an operational amplifier with infinite gain (G), the input terminals (a, b) of which are connected to the terminal s (A,C) of the sampling resistor (r) and the output terminal (c) of which is connected to the common terminal (C) of the isolating impedance (L; $T_r$) and to the sampling resistor (r).

3. Circuit according to one of the claims 1 or 2, **characterized in that** sai d isolating impedance is a self inductance (L).

4. Circuit according to one of the claims 1 or 2, **characterized in that** said isolating impedance is made of windings of a transformer ($T_r$) with a ratio of 1/1, arranged serially along the isolating circuit.

5. Circuit according to any one of claims 2 to 4, **characterized in that** it comprises an impedance adapter (12) made of a voltage divider arranged on the input terminal

 (a) of said operational amplifier (11) connected to the terminal (A) of the sampling resistor (r) opposite to said common terminal (C).

6. Circuit according to claim 5, **characterized in that** it comprises a 2/4 wires converter (20) made, for a part, of an emitting operational amplifier (21), capable of injecting an emitter signal ($T_x$) on the line through said impedance adapter (12), and, for another part, of a receiving operational amplifier, capable of receiving from the line a receiver signal ($R_x$) on a first input terminal (a') and said emitter signal ($T_x$) on a second input terminal (b').

**FIG.1**

**FIG.2**

**FIG.3**

FIG.4